# EUROPEAN PATENT APPLICATION

(11) **EP 4 060 477 A1**
(43) Date of publication of application: **21.09.2022**
(21) Application number: 20887956.9
(22) Date of filing: 08.10.2020
(51) Int. Cl.: G06F 8/20, G06F 13/00

(54) **IOT CONNECTION SYSTEM, COMPUTER PROGRAM, AND INFORMATION PROCESSING METHOD**

(30) Priority: 13.11.2019 JP 2019205140
(71) Applicant: IOT-EX Inc., Tokyo, 101-0043 (JP)
(72) Inventor: MATSUMURA Jun, Tokyo 101-0043 (JP)
(74) Representative: REHBERG HÜPPE + PARTNER
(86) International application number: PCT/JP2020/038140
(87) International publication number: WO 2021/095406

(57) **Abstract**

An attractive service is provided by freely mutually connecting existing loT devices in a silo state for each private cloud via the Internet. An loT connection system includes an loT hub that is realized over a cloud and a local loT router that is connected to the loT hub. The loT hub includes at least one of a first driver configured to connect the loT hub to a private cloud to which a first device is able to be connected and a second driver configured to connect a second device to the loT hub. The loT router includes a third driver configured to connect a third device to the loT router. The loT router is an information processing terminal that is able to communicate with a predetermined base station. The third device is connected to the loT hub using a tethering function of the loT router in a specific situation.

## Description

### TECHNICAL FIELD

The present disclosure relates to an loT connection system, a computer program, and an information processing method.

### BACKGROUND ART

Recently, the number of devices that can access the Internet and receive various services has increased. Such devices are called Internet of Things (loT) devices.

In general, since such loT devices are individually connected to dedicated private clouds, loT devices with different specifications which are manufactured by different makers cannot be connected to the same private cloud.

Recently, an loT cloud service which is called an loT hub that can allow loT devices manufactured by various makers to be connected thereto by publishing an application programming interface (API) for connection to a cloud or providing a software development kit (SDK) or the like has also been provided (such as Non Patent Literature 1 and Non Patent Literature 2).

### [Citation List]

### [Non Patent Literature]

[Non Patent Literature 1]
   "Azure loT Hub", Microsoft, [retrieved June 2, 2019], Internet <https://azure.microsoft.com/ja-jp/services/iot-hub/>
[Non Patent Literature 2]
   "AWS loT", Amazon Web Services, [retrieved June 2, 2019], Internet <https://aws.amazon.com/jp/iot/>

### SUMMARY OF THE INVENTION

### TECHNICAL PROBLEM

Although the aforementioned loT cloud services exist, cooperation between the services is limited and companies of loT devices need to develop dedicated connection programs which differ depending on the services and incorporate the connection programs into the devices.

Therefore, an objective of the present disclosure is to provide an attractive service by freely mutually connecting existing loT devices in a silo state for each private cloud via the Internet.

### SOLUTION TO PROBLEM

An loT connection system according to the present disclosure is an loT connection system including an loT hub that is realized over a cloud and a local loT router that is connected to the loT hub, wherein the loT hub includes at least one of a first driver configured to connect the loT hub to a private cloud to which a first device is able to be connected and a second driver configured to connect a second device to the loT hub, the loT router includes a third driver configured to connect a third device to the loT router, the loT router is an information processing terminal that is able to communicate with a predetermined base station, and the third device is connected to the loT hub using a tethering function of the loT router in a specific situation.

The specific situation may be a situation in which the third device is disconnected from a predetermined wireless/wired LAN.

The loT router may be remotely controlled by a manager device.

At least one of the first driver, the second driver, and the third driver may realize a virtual device function of virtually reproducing the first device, the second device, or the third device.

The loT hub may realize a directory function of causing the first device, the second device, the third device, and an loT service available via the loT hub to cooperate with each other.

The directory function may identify the first device, the second drive, or the third device or the loT service and give an instruction to the first device, the second device, or the third device or the loT service.

The loT hub may further include a Web API for use of an loT application.

Information which is acquired from the first device, the second device, or the third device is not stored in the loT hub.

A computer program according to the present disclosure is a computer program that is executed in an loT connection system including an loT hub that is realized over a cloud and a local loT router that is connected to the loT hub, wherein the loT hub includes at least one of a first driver configured to connect the loT hub to a private cloud to which a first device is able to be connected and a second driver configured to connect a second device to the loT hub, the loT router includes a third driver configured to connect a third device to the loT router, and the loT router that is a mobile device that is able to communicate with a predetermined base station is caused to perform: a determination function of determining whether the loT router is in a specific situation; and a tethering function of causing the third device to continuously transmit and receive information to and from the loT hub via the mobile-phone communication network when it is determined through the determination function that the loT router is in the specific situation.

An information processing method according to the present disclosure is an information processing method that is performed in an loT connection system including an loT hub that is realized over a cloud and a local loT router that is connected to the loT hub, wherein the loT hub includes at least one of a first driver configured to connect the loT hub to a private cloud to which a first device is able to be connected and a second driver configured to connect a second device to the loT hub, the loT router includes a third driver configured to connect a third device to the loT router, and the loT router that is a mobile device that is able to communicate with a predetermined base station is caused to perform: a determination step of determining whether the loT router is in a specific situation; and a tethering step of causing the third device to continuously transmit and receive information to and from the loT hub via the mobile-phone communication network when it is determined in the determination step that the loT router is in the specific situation.

### ADVANTAGEOUS EFFECTS OF INVENTION

According to the present disclosure, it is possible to provide an attractive service by freely mutually connecting existing loT devices in a silo state for each private cloud via the Internet.

Specifically, according to the present disclosure, it is possible to easily mutually connect loT devices connected to existing private clouds as well as those directly connected loT devices.

According to the present disclosure, it is possible to provide an loT connection system, a computer program, and an information processing method that can continue to provide services even in a state such as power failure in which loT devices cannot be connected to a network.

### BRIEF DESCRIPTION OF THE DRAWINGS

In the following, the invention is further explained and described with respect to preferred exemplary embodiments illustrated in the drawings.
- **Fig.** 1: is a system configuration diagram illustrating an example of a configuration of an loT connection system according to an embodiment of the present disclosure.
- **Fig. 2**: is a diagram illustrating an example of a plurality of private clouds in the loT connection system according to the embodiment of the present disclosure.
- **Fig. 3**: is a diagram illustrating an example of a plurality of first devices which are connected to private clouds in the loT connection system according to the embodiment of the present disclosure.
- **Fig. 4**: is a diagram illustrating an example of a flow of a service which is provided by the loT connection system according to the embodiment of the present disclosure.
- **Fig. 5**: is a hardware configuration diagram illustrating a hardware configuration of an loT router according to the embodiment of the present disclosure.
- **Fig. 6**: is a diagram illustrating an example of a flow of a service which is provided by the loT connection system according to the embodiment of the present disclosure.
- **Fig. 7**: is a diagram illustrating another example of a flow of a service which is provided by the loT connection system according to the embodiment of the present disclosure.
- **Fig. 8**: is a diagram illustrating an example of a flow of a virtual driver function which is provided by the loT connection system according to the embodiment of the present disclosure.
- **Fig. 9**: is a diagram illustrating another example of a flow of a virtual driver function which is provided by the loT connection system according to the embodiment of the present disclosure.
- **Fig. 10**: is a configuration diagram illustrating a configuration and a circuit configuration of the loT router according to the embodiment of the present disclosure.
- **Fig. 11**: is a flowchart illustrating an example of a flow of an information processing method according to an embodiment of the present disclosure.

### DESCRIPTION OF EMBODIMENTS

Hereinafter, an loT connection system according to an embodiment of the present disclosure will be described with reference to the accompanying drawings.

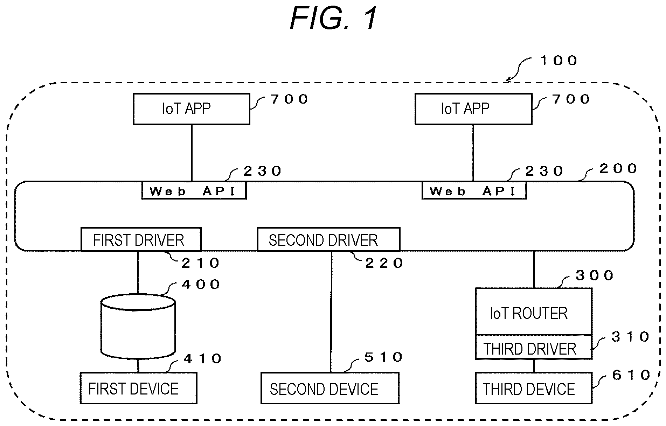

As illustrated in **Fig. 1****,** an loT connection system 100 according to the present disclosure includes an loT hub 200 and an loT router 300.

The loT hub 200 is realized over a cloud. Specifically, the loT hub 200 is a managed service hosted in a cloud and serves as a relay for bidirectional communication between an loT application (hereinafter referred to as an "loT app") and an loT device.

The loT router 300 is local and is connected to the loT hub 200 by a wide area network (WAN).

Specifically, the loT router 300 serves to realize connection of an loT device that is not connected to the Internet, such as an in-house network, to the loT hub 200.

The loT hub 200 includes a first driver 210 and a second driver 220.

The first driver 210 and the second driver 220 serve to absorb a difference in specifications between makers of loT devices.

The first driver 210 serves to connect a private cloud 400 to which a first device 410 is able to be connected to the loT hub 200.

For example, it is preferable that the first device 410 and the private cloud 400 be connected by a local area network (LAN) and the private cloud 400 and the first driver 210 be connected by a WAN.

The private cloud 400 is provided by a provider of the first device 410. The number of private clouds 400 in Fig. 1 is one, but it is not limited thereto and a plurality of private clouds 400 may be connected to the loT hub 200. The loT hub 200 may include a plurality of first drivers 210.

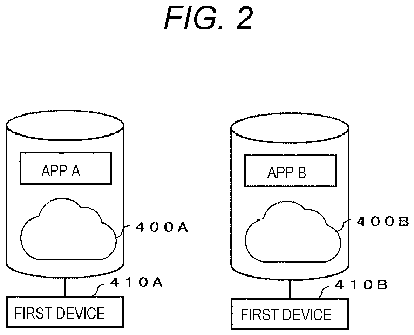

**Fig. 2** illustrates details of two private clouds 400A and 400B which are provided by different providers A and B. As illustrated in Fig. 2, the private cloud 400A is connected to an application A (hereinafter referred to as "app A") which is provided by a provider A and provides a service based on the app A to a first device 410.

Similarly, the private cloud 400B is connected to an application B (hereinafter referred to as "app B") which is provided by a provider B and provides a service based on the app B to a first device 410.

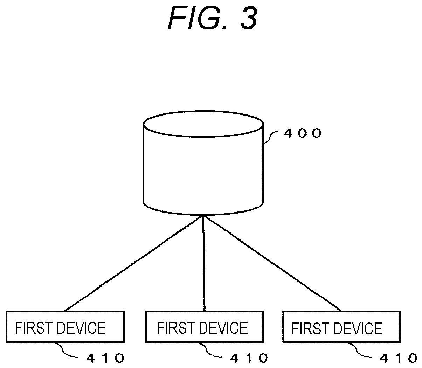

Figs. 1 and 2 illustrate examples in which only one first device 410 is connected to one private cloud 400, but a plurality of first devices 410 may be connected to one private cloud 400 as illustrated in **Fig. 3****.**

The first device 410 may be a device for which a private cloud is provided by a provider. Examples thereof include an electronic lock having a remote lock function, an AI speaker, and a nursing bed which is able to be remotely operated, but the first device is not particularly limited thereto.

The second driver 220 serves to directly connect a second device 510 to the loT hub 200.

For example, it is preferable that the second device 510 and the second driver 220 be connected by a LAN.

Fig. 1 illustrates an example in which only one second device 510 is connected to the second driver 220, but a plurality of second devices 510 may be connected to one second driver 220. The loT hub 200 may include a plurality of second drivers 220.

The second device 510 may be a device for which a private cloud is not provided by a provider. Examples thereof include a fan, an air conditioner, a window, a curtain, and a light, but the second device is not particularly limited thereto.

The loT router 300 includes a third driver 310. The loT router 300 may include a plurality of third drivers 310.

The third driver 310 serves to connect a third device 610 to the loT router 300.

For example, it is preferable that the third device 610 and the third driver 310 be connected by a LAN and the loT router 300 and the loT hub 200 be connected by a WAN.

As described above, the third device 610 may be an loT device which is not connected to the Internet such as an in-house network. The third device 610 may be a device which should not be directly connected to the loT hub 200 from a point of view of security, privacy, and safety. Examples thereof include a gas stove, a face authentication device, and a sensor information collection data logger, but the third device is not particularly limited thereto. From a point of view of reducing a risk in disasters which will be described later, any device may be connected as the third device 610 to the loT router 300.

In this way, the loT connection system 100 according to the invention is a hybrid type loT connection system that connects some devices to a local loT router 300 instead of directly connecting all devices to the loT hub 200 in a cloud.

With this configuration, it is possible to easily mutually connect loT devices connected to an existing private cloud as well as loT devices which are directly connected.

Accordingly, unlike the related art in which only loT devices of a predetermined maker are connected, it is possible to easily mutually connect loT devices of various makers. By mutually connecting loT devices of various makers, it is possible to provide a unique service which was not provided in the related art.

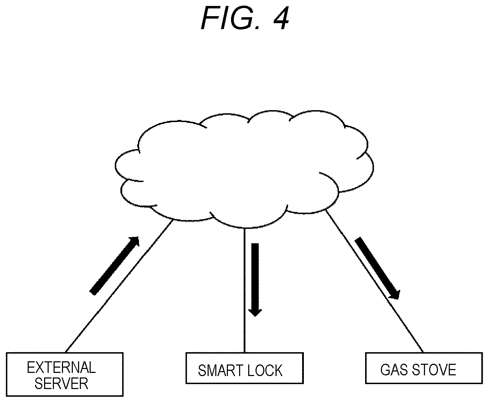

For example, with the loT connection system 100 according to the invention, when emergency earthquake news is received from an external server as illustrated in **Fig. 4****,** it is possible to easily realize a service of transmitting a flameout signal to a gas stove and unlocking a front door.

It is preferable that the loT router 300 be an information processing terminal which can communicate with a predetermined base station.

For example, the information processing terminal which can communicate with a predetermined base station is an information processing terminal into which a SIM card is inserted for use such as a smartphone or a tablet terminal. Since a communication capacity between the loT router 300 and the loT hub 200 is a low capacity which is equal to or less than 100 Mbyte per month, a low-price SIM card with a low communication capacity can be satisfactorily inserted into the loT router 300.

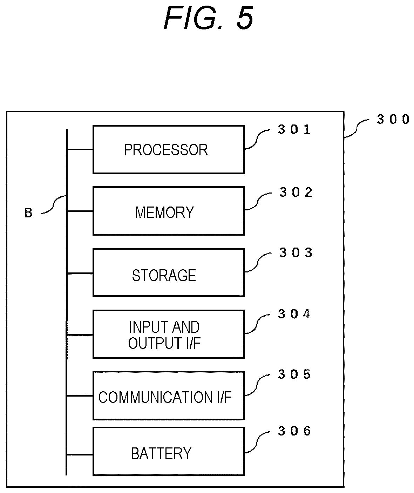

A hardware configuration of the information processing terminal 300 (the loT router 300) will be described below with reference to **Fig. 5****.** The information processing terminal 300 includes a processor 301, a memory 302, a storage 303, an input and output interface (an input and output I/F) 304, and a communication interface (a communication I/F) 305. These constituents are connected to each other via a bus B.

The information processing terminal 300 can realize functions and methods described in the embodiment by cooperation between the processor 301, the memory 302, the storage 303, the input and output I/F 304, and the communication I/F 305.

The processor 301 performs functions and/or methods which are realized by codes or commands included in a program stored in the storage 303. The processor 301 may include, for example, a central processing unit (CPU), a micro processing unit (MPU), a graphics processing unit (GPU), a microprocessor, a processor core, a multiprocessor, an application-specific integrated circuit (ASIC), or a field-programmable gate array (FPGA) and realize processes disclosed in the embodiments using a logical circuit (hardware) or a dedicated circuit formed of an integrated circuit (IC) or a large scale integration (LSI) circuit. These circuits may be realized by one or more integrated circuits, or a plurality of processes described in the embodiments may be realized by one integrated circuit. LSI may be called as VLSI, super LSI, ultra LSI, or the like depending on a difference in a degree of integration.

The memory 302 temporarily stores a program loaded from the storage 303 and provides a work area to the processor 301. The memory 302 temporarily stores various types of data which are generated while the processor 301 is executing the program. The memory 302 includes, for example, a random access memory (RAM) and a read only memory (ROM).

The storage 303 stores a program. The storage 303 includes, for example, a hard disk drive (HDD), a solid state drive (SSD), and a flash memory.

The communication I/F 305 is mounted as hardware such as a network adaptor, communication software, or a combination thereof and transmits and receives various data via a network 1600. This communication may be performed in one of a wired manner and a wireless manner and may employ any communication protocol as long as mutual communication can be performed. The communication I/F 305 performs communication with another information processing device via a network. The communication I/F 305 transmits various types of data to another information processing device in response to an instruction from the processor 301. The communication I/F 305 receives various types of data transmitted from another information processing device and transmits the received data to the processor 301.

The input and output I/F 304 includes an input device that receives various operations on the information processing terminal 300 and an output device that outputs processing results processed by the information processing terminal 300. In the input and output I/F 304, the input device and the output device may be unified, or the input device and the output device may be separated from each other.

The input device is realized by one of all types of devices which can receive an input from a user and transmit information associated with the input to the processor 301 or a combination thereof. The input device includes, for example, a touch panel, a touch display, or hardware keys such as a keyboard, a pointing device such as a mouse, a camera (an operation input by an image), and a microphone (an operation input by voice).

The output device outputs a processing result processed by the processor 301. The output device includes, for example, a touch panel and a speaker.

It is assumed that the information processing terminal 300 includes a battery. Such a battery can store electric power by charging. The information processing terminal 300 can realize the functions in the present disclosure without being connected to a power source in about 3 days from a fully charged state. In a normal state (situations other than a specific situation which will be described later), it is assumed that the information processing terminal 300 be connected to a power source for use.

It is assumed that the third device 610 be connected to the loT hub 200 using a tethering function of the loT router 300 in a specific situation.

The specific situation may be a situation in which the third device 610 is disconnected from a predetermined wireless/wired LAN, or the like, but is not limited thereto.

One reason for falling in to such a specific situation is blackout, but is not limited thereto and the reason may be malfunction, connection failure, or the like of a Wi-Fi (registered trademark) router.

A known technique can be used as the tethering function and for example, technique such as Wi-Fi tethering, Bluetooth (registered trademark) tethering, or USB tethering can be used.

With this configuration, it is possible to provide an attractive service by freely mutually connecting existing loT devices in a silo state for each private cloud via the Internet.

Specifically, according to the present disclosure, it is possible to easily mutually connect loT devices connected to an existing private cloud as well as loT devices which are directly connected.

With this configuration, by connecting the third device 610 to the loT hub 200 using the tethering function of the loT router 300 in a specific situation, it is possible to continuously use a service even in a state in which loT devices cannot be connected to a network in disasters or the like.

It is preferable that the loT router 300 can be remotely controlled by a manager device. With this configuration, it is possible to fully support each of the loT routers.

The remote control is realized by installing a dedicated application in both the manager device and the loT router 300. In consideration of easiness of supporting the remote control, it is preferable that an Android terminal be used as the information processing terminal serving as the loT router 300.

It is preferable that the loT router 300 be subjected to various device management (VDM) by the manager device. Such VDM can be realized using an existing mobile device management (MDM) technique. With this configuration, it is possible to immediately unitarily manage, remotely monitor, and update loT routers which are installed in a large number of households. Setting of a device and distribution and update of an application can be remotely monitored and controlled through VDM. Accordingly, it is possible to realize reduction of cost and an increase in business efficiency.

Only an authenticated application or device can be connected to the loT hub 200, but the loT router 300 can extend the loT hub 200 locally (to a house or the like) such that it is possible to achieve a real-time properties, securement of security or privacy, reduction of an amount of communication data, and the like which can be only locally realized.

By employing an information processing terminal as the loT router 300, it is not necessary to use a client's smartphone or an Internet circuit line in a house and it is possible to reduce a risk in which troubles other than supposed occur.

In the loT connection system 100 according to the present disclosure, information which a user should describe to create the first driver 210, the second driver 220, and the third driver 310 may be limited to information on device definitions and command definitions.

A method of creating the first driver 210, the second driver 220, and the third driver 310 will be described below. A creator may be a user associated with manufacturing and development of loT devices or a user associated with provision of the loT connection system according to the present disclosure.

Regarding the first driver 210, the second driver 220, and the third driver 310, information of the same details can be described, and it may be described in different programming languages.

First, a creator defines an available device list as device definitions. For example, when a "weather sensor", an "indoor sensor", an "outdoor sensor", a "suspicious person sensor", an "approval sensor", and a "power sensor" are defined as available devices, names thereof and "weather", "inhouse", "outdoor", "security", "approve", and "power" which are IDs thereof are described.

Subsequently, the creator defines available commands as command definitions. For example, when available commands for the "outdoor sensor" are defined, an observation command for a sensor value is described. Examples of the observation command include "observe", "get", and "observe outdoors."

By causing a creator to embed such information on device definitions and command definitions in a program in a hole filling manner, the first driver 210, the second driver 220, and the third driver 310 can be completed. The other parts can be provided as an SDK from a provider.

The SDK part includes a part associated with a device operation process in the received command, a part associated with a pre-process of the collected sensor data/operation result data, and a part associated with a process of transmitting data to the loT hub.

With this configuration, since drivers for various types of loT devices can be simply completed, it is possible to realize an loT connection system that can flexibly and easily connect loT devices.

In general, the technical field of engineers associated with device development is different from that of engineers for Web development and many engineers for device development do not have the technical expertise to connect devices to an loT hub.

Accordingly, as in the present disclosure, it is very profitable for any driver program to be able to be created using a simple method in a hole filling manner. Accordingly, it is possible to reduce development costs or development periods associated with connection of an loT device to an loT hub in comparison with those in the related art.

Even when there is a difference in allowable costs like a fan and an air conditioner, it is possible to equally realize connection thereof to an loT hub through a decrease in development costs.

Connection between an loT hub 200 and an loT app associated with the loT connection system 100 according to the present disclosure will be described below.

As illustrated in Fig. 1, an loT hub 200 may include a Web API 230 for use of an loT application 700. As illustrated in Fig. 1, loT applications 700 corresponding to the number of services can be connected and each can be connected using a Web API 230.

Each loT application 700 is created by describing a data acquisition logic from an loT device (sensor) and/or an operation logic of the loT devices in an application.

The data acquisition logic includes a part for pre-processing the acquired sensor data and a part for performing transmission to an API of the loT hub 200. Necessary information includes a destination URL which is provided by a provider of the loT connection system 100, an API key which is provided by a provider, device information, and an execution command.

The device operation logic includes a part for pre-processing a command for a device to be operated and a part for performing transmission to an API of the loT hub 200. Necessary information includes a destination URL which is provided by the provider of the loT connection system 100, an API key which is provided by the provider, device information, and an execution command.

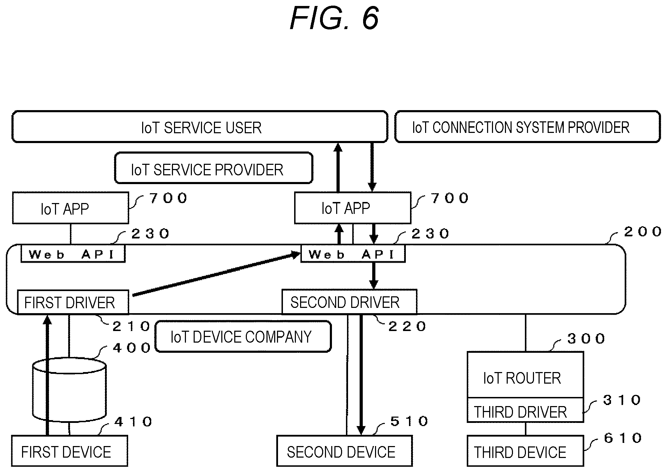

**Fig. 6** is a diagram illustrating a flow in which an loT service user (an end user) is provided with an loT service from an loT service provider using an loT device which is provided by the loT device provider. As illustrated in Fig. 6, when an event is first transmitted from a first device 410, the end user is notified of the event via the private cloud 400, the first driver 210, the Web API 230, and the loT application 700.

Subsequently, when the end user determines an action, the second device 510 is instructed to execute the action via the loT application 700, the Web API 230, and the second driver 220.

Cooperation between loT devices can be expressed by an event-driving program such as "OO, if -". This process can be made into a component as a micro service, can be commonalized for use, and can be mounted as a function of a service (FaaS) function.

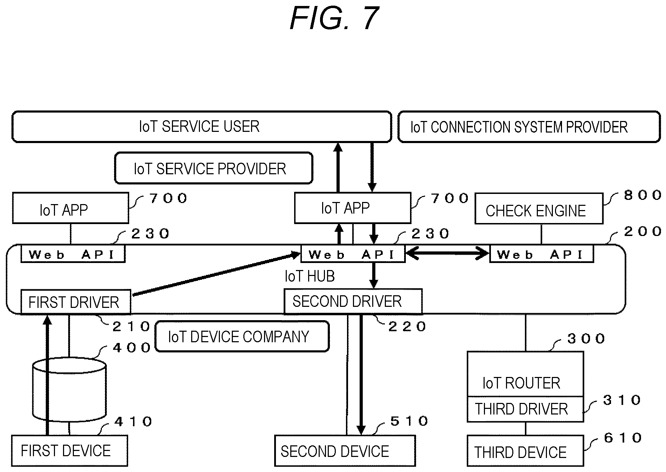

As illustrated in Fig. 7, the loT hub 200 according to the present disclosure can be connected to a check engine 800. The check engine 800 serves to check details of which a device is instructed by the loT hub 200 and to prevent an inappropriate action from being executed.

For example, when an loT service, "an air conditioner is stopped and a window is opened if outside air is fair", is provided, the inside may get wet if an unexpected rainstorm strikes immediately after, and the check engine 800 serves to prevent such a threat derived from an loT service.

At least one of the first driver 210, the second driver 220, and the third driver 310 according to the present disclosure can realize a virtual device function.

The virtual device function is for virtually reproducing the first device 410, the second device 510, or the third device 610.

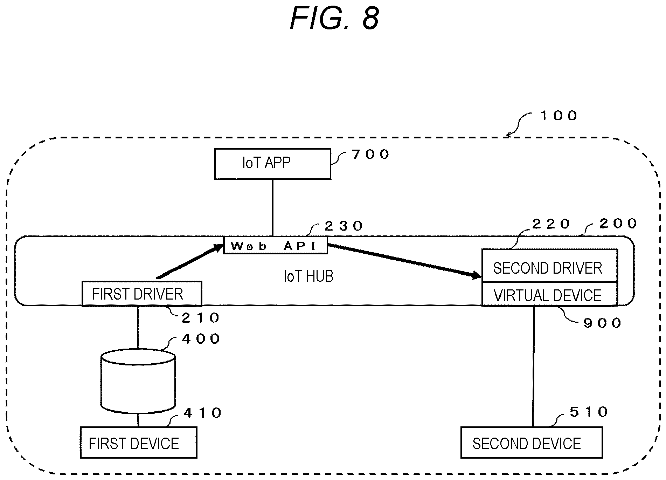

**Fig. 8** illustrates an example in which the second driver 220 according to the present disclosure realizes the virtual device function. As illustrated in Fig. 8, by providing a virtual device 900 that can reproduce transmission and reception of a command for the second device 510 in the second driver 220, it is possible to develop an loT application using the second device 510 even when the second device 510 is not connected. When an operation failure occurs, it is possible to easily perform failure identification of determining which of the second device 510 and the loT hub 200 is out of order without visiting the spot.

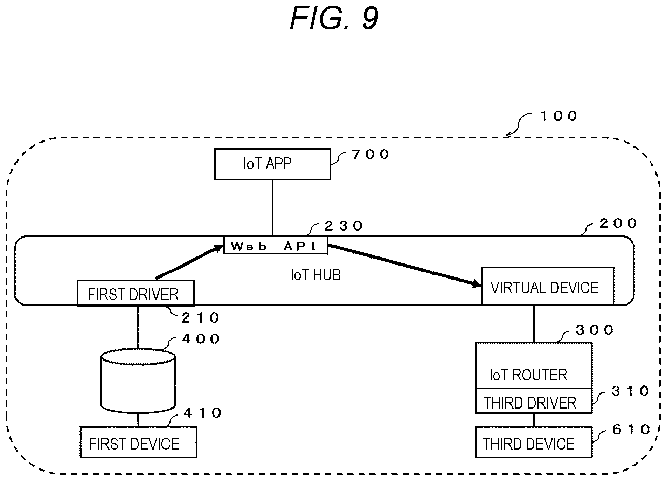

According to the present disclosure, the loT hub 200 may realize the virtual device function instead of a driver as illustrated in **Fig. 9****.** This is effective for failure identification of the third device 610 connected to the local loT router 300.

The loT hub 200 in the loT connection system 100 according to the invention can realize a directory function.

The directory function is for causing the first device 410, the second device 510, and the third device 610 to cooperate with an loT service which can be used via the loT hub 200.

That is, the directory function is for realizing a function of identifying objects or services such that a path from an object (device) to a service, from a service to an object, and from an object to an object can be ascertained and providing instructions to the objects or the services.

Specifically, the directory function can identify the first device 410, the second device 510, or the third device 610 or the loT service or provide instructions to the first device 410, the second device 510, or the third device 610 or the loT service.

In the loT connection system 100 according to the invention, information acquired from the first device 410, the second device 510, or the third device 610 may not be stored in the loT hub 200.

It is supposed that the loT connection system 100 according to the invention is run by a telecommunications carrier. A telecommunication carrier has an obligation to keep communication secrets, and thus does not store information acquired from various devices for other purposes of utilization.

Since such information is valuable information, an loT device is generally enclosed in a private cloud of each carrier in order to exclusively acquire such information.

On the other hand, with the loT connection system 100 according to the invention, since it is run by a telecommunications carrier, it is possible to mutually connect loT devices and loT applications at a neutral position and to promote loT business.

Since continuity of an loT mutual connection service affects continuity of an loT service of a corporation using the loT mutual connection service, it is preferable that the corporations share a mutual connection infrastructure.

In the loT connection system 100 according to the invention, only devices or loT applications which are permitted using an API key and an authentication scheme can be connected to the loT hub 200. That is, the loT connection system 100 according to the invention can construct a closed network dedicated for loT communication over the Internet. Since communication paths are encrypted and loT routers are managed by a mobile device management (MDM) technique, it is also possible to cope with new attacks or weaknesses of an OS or applications.

When it is intended to connect non-loT devices to the loT hub 200, it is possible to perform development in a short time by utilizing backend as a service (BaaS) or SDK.

The provider of the loT connection system 100 can propose a mutual connection support service of an loT device. Specifically, it is possible to provide business matching and consulting services. That is, in order to provide added value, it is possible to search for necessary opponents and to perform introduction of value creation patterns and best practices thereto or the like.

It is possible to create an attractive service by combination with devices or applications of other providers and to expand business by bringing added value.

A computer program according to an embodiment of the present disclosure will be described below.

The computer program according to the present disclosure is executed in an loT connection system 100 including an loT hub 200 that is realized over a cloud and a local loT router 300 that is connected to the loT hub as illustrated in Fig. 1.

The loT hub 200 includes at least one of a first driver 210 configured to connect the loT hub 200 to a private cloud 400 to which a first device 410 is able to be connected and a second driver 220 configured to connect a second device 510 to the loT hub 200, and the loT router 300 includes a third driver 310 configured to connect a third device 610 to the loT router 300.

The computer program according to the present disclosure causes the loT router 300 which is an information processing terminal communicating with a predetermined base station to perform a determination function and a connection function.

The determination function is for determining whether the third device 610 is in a specific situation.

The connection function is for connecting the third device 610 to the loT hub 200 using a tethering function when it is determined through the determination function that the third device 610 is in a specific situation.

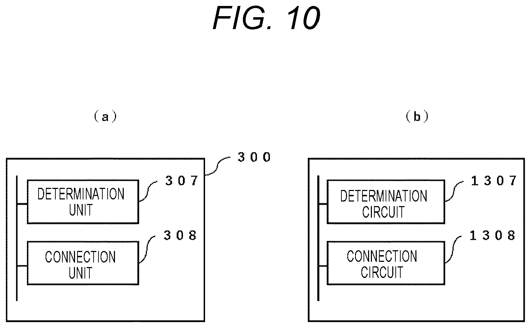

The functions can be realized by a determination circuit 1307 and a connection circuit 1308 illustrated in Fig. 10(b). The determination circuit 1307 and the connection circuit 1308 are realized by a determination unit 307 and a connection unit 308 of the loT router 300 illustrated in Fig. 10(a).

With this configuration, it is possible to provide an attractive service by freely mutually connecting existing loT devices in a silo state for each private cloud via the Internet.

Specifically, according to the present disclosure, it is possible to easily mutually connect loT devices connected to an existing private cloud as well as loT devices which are directly connected.

With this configuration, by connecting the third device 610 to the loT hub 200 using the tethering function of the loT router 300 in a specific situation, it is possible to continuously use a service even in a state in which loT devices cannot be connected to a network in disasters or the like.

An information processing method according to the present disclosure will be finally described below.

As illustrated in Fig. 1, the information processing method according to the present disclosure is performed in an loT connection system 100 including an loT hub 200 that is realized over a cloud and a local loT router 300 that is connected to the loT hub.

The loT hub includes at least one of a first driver configured to connect the loT hub to a private cloud to which a first device is able to be connected and a second driver configured to connect a second device to the loT hub.

The loT hub 200 includes at least one of a first driver 210 configured to connect the loT hub 200 to the private cloud 400 to which the first device 410 is able to be connected and a second driver 220 configured to connect the second device 510 to the loT hub 200, and the loT router 300 includes a third driver 310 configured to connect the third device 610 to the loT router 300.

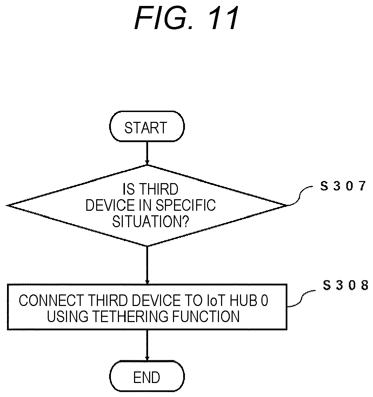

The information processing method according to the present disclosure causes the loT router 300 which is an information processing terminal communicating with a predetermined base station to perform a determination step and a connection step as illustrated in **Fig. 11****.**

The determination step S308 is for determining whether the third device 610 is in a specific situation. The determination step S308 can be realized by the determination unit 307 of the loT router 300 as illustrated in Fig. 10(a).

The connection step S309 is for connecting the third device 610 to the loT hub 200 using a tethering function when it is determined in the determination step S308 that the third device 610 is in a specific situation. The connection step 309 can be realized by the connection unit 308 of the loT router 300 as illustrated in Fig. 10(a).

With this configuration, it is possible to provide an attractive service by freely mutually connecting existing loT devices in a silo state for each private cloud via the Internet.

Specifically, according to the present disclosure, it is possible to easily mutually connect loT devices connected to an existing private cloud as well as loT devices which are directly connected.

With this configuration, by connecting the third device 610 to the loT hub 200 using the tethering function of the loT router 300 in a specific situation, it is possible to continuously use a service even in a state in which loT devices cannot be connected to a network in disasters or the like.

While some embodiments of the invention have been described above, the embodiments are merely presented as examples and are not intended to limit the scope of the invention. The embodiments can be embodied in various other forms and can be subjected to various omissions, substitutions, and alterations without departing from the gist of the invention. Novel embodiments or modifications thereof belong to the scope or gist of the invention and also belong to the inventions described in the appended claims and a scope equivalent thereto.

The techniques described above in the embodiments may be stored as a program which can be executed by a calculator (computer) in a recording medium such as a magnetic disk (such as a Floppy (registered trademark) disk or a hard disk), an optical disc (such as a CD-ROM, a DVD, or a MO), or a semiconductor memory (such as a ROM, a RAM, or a flash memory), or may be transmitted and distributed through a communication medium. The program stored in the medium side includes a setting program in which a software means (including a table or a data structure in addition to an execution program) which is performed by a calculator is installed in the calculator. The calculator that realizes the device according to the invention performs the aforementioned processes by reading a program recorded on a recording medium, constructing a software means using a setting program in some case, and controlling operations using the software means. The recording medium mentioned in this specification is not limited to a medium for distribution, and includes a storage medium such as a magnetic disk or a semiconductor memory that is provided in a calculator or a device connected thereto via a network. The storage unit may also serve as, for example, a main storage device, an auxiliary storage device, or a cache storage device.

### LIST OF REFERENCE NUMERALS

- 100: IoT connection system
- 200: loT hub
- 210: First driver
- 220: Second driver
- 230: Web API
- 300: loT router
- 310: Third driver
- 400: Private cloud
- 410: First device
- 510: Second device
- 610: Third device
- 700: loT app
- 800: Check engine
- 900: Virtual device

## Claims

1. An loT connection system comprising:
an loT hub that is realized over a cloud; and
a local loT router that is connected to the loT hub,
wherein the loT hub includes at least one of a first driver configured to connect the loT hub to a private cloud to which a first device is able to be connected and a second driver configured to connect a second device to the loT hub,
wherein the loT router includes a third driver configured to connect a third device to the loT router,
wherein the loT router is a mobile device that is able to be connected to a mobile-phone communication network even in a specific situation, and
wherein the third device continues to transmit and receive information to and from the loT hub even in the specific situation using a tethering function of the loT router.

2. The loT connection system according to claim 1, wherein the third device is a device of which connection to the Internet is prohibited in view of securing safety or protecting private information and the loT router which is a device authenticated by the loT hub relays information to the third device.

3. The loT connection system according to claim 1 or 2, wherein a plurality of loT routers are connected to the loT hub, and
wherein device setting and application distribution and update of the plurality of loT routers are remotely unitarily controlled by a manager device.

4. The loT connection system according to any one of claims 1 to 3, wherein at least one of the first driver, the second driver, and the third driver realizes a virtual device function of virtually reproducing the first device, the second device, or the third device.

5. The loT connection system according to any one of claims 1 to 4, wherein the loT hub realizes a directory function of causing the first device, the second device, the third device, and an loT service available via the loT hub to cooperate with each other.

6. The loT connection system according to claim 5, wherein the directory function identifies the first device, the second drive, the third device, or the loT service and gives an instruction to the first device, the second device, the third device, or the loT service.

7. The loT connection system according to any one of claims 1 to 6, wherein the loT hub further includes a Web API for use of an loT application.

8. The loT connection system according to any one of claims 1 to 7, wherein information which is acquired from the first device, the second device, or the third device is not stored in the loT hub.

9. A computer program that is executed in an loT connection system including an loT hub that is realized over a cloud and a local loT router that is connected to the loT hub,
wherein the loT hub includes at least one of a first driver configured to connect the loT hub to a private cloud to which a first device is able to be connected and a second driver configured to connect a second device to the loT hub,
wherein the loT router includes a third driver configured to connect a third device to the loT router, and
wherein the loT router that is a mobile device that is able to be connected to a mobile-phone communication network is caused to perform:
a determination function of determining whether the loT router is in a specific situation; and
a tethering function of causing the third device to continuously transmit and receive information to and from the loT hub via the mobile-phone communication network when it is determined through the determination function that the loT router is in the specific situation.

10. An information processing method that is performed in an loT connection system including an loT hub that is realized over a cloud and a local loT router that is connected to the loT hub,
wherein the loT hub includes at least one of a first driver configured to connect the loT hub to a private cloud to which a first device is able to be connected and a second driver configured to connect a second device to the loT hub,
wherein the loT router includes a third driver configured to connect a third device to the loT router, and
wherein the loT router that is a mobile device that is able to be connected to a mobile-phone communication network is caused to perform:
a determination step of determining whether the loT router is in a specific situation; and
a tethering step of causing the third device to continuously transmit and receive information to and from the loT hub via the mobile-phone communication network when it is determined in the determination step that the loT router is in the specific situation.
